# EUROPÄISCHE PATENTSCHRIFT

(11) **EP 1 364 978 B1**
(45) Veröffentlichungstag und Bekanntmachung des Hinweises auf die Patenterteilung: **01.06.2005**
(21) Anmeldenummer: 03009577.2
(22) Anmeldetag: 29.04.2003
(51) Int. Cl.: C08G 59/14, C08F 290/06, C08F 290/14, C08G 8/28, C08F 220/32, C08G 8/32, C08G 8/36, C08F 299/02

(54) **Modifizierte Epoxyacrylate**
Modified epoxyacrylates
Epoxyacrylates modifiés

(30) Priorität: 24.05.2002 DE 10223313
(43) Veröffentlichungstag der Anmeldung: 26.11.2003
(73) Patentinhaber: Bakelite AG, 58642 Iserlohn-Letmathe (DE)
(72) Erfinder: Grundke, Ulrich, 47137 Duisburg (DE); Rottländer, Christian , Dr., 42553 Velbert (DE); Kalla, Volker, 47167 Duisburg (DE)

(56) Entgegenhaltungen:
- EP-A- 0 632 079
- GB-A- 1 187 652
- US-A- 5 009 982
- US-A- 6 015 651
- US-A1- 2002 019 500

## Beschreibung

Die Erfindung betrifft Epoxyacrylate, deren Molekulargewichte durch weitere Umsetzungen erhöht sind. Epoxyacrylate sind in großer Zahl bekannt und werden u.a. als photohärtende Komponenten in Beschichtungsmitteln eingesetzt, wie dies z.B. in EP-A 0643103 oder EP-A 1103540 offenbart ist. Das bevorzugte Einsatzgebiet ist die Verwendung in Photoresistformulierungen, wo sie den Endprodukten gute thermische, mechanische und elektrische Eigenschaften verleihen. Die eingesetzten Epoxyacrylate sind in der Regel relativ niedermolekular. Das hat den Nachteil, daß mit diesen Verbindungen hergestellte Resistfilme auf den Leiterplatten klebrig sind, und daß die Kantenabdeckung als nicht ausreichend angesehen wird. In der Praxis wird dieser Nachteil durch Zusatz hochmolekularer Bindemittel zu umgehen versucht, wobei jedoch diese Bindemittelzusätze bei der Härtung nicht in das Netzwerk eingebunden werden. Dadurch werden die Reaktivität der Acrylate, die chemische Beständigkeit und die elektrischen Eigenschaften der Resistschichten vermindert

Gemäß EP-A 0 632 079 wird dieses Problem dadurch gelöst, daß die Molmassen der Ausgangsepoxidharze durch Reaktion mit mehrwertigen Phenolen, insbesondere mit Bisphenolen erhöht werden, wobei die Molekülgrößen um mehr als 100% vergrößert werden. Die erhaltenen Produkte lösen zwar die oben angeschnittenen Probleme, sind allerdings in ihren Hafteigenschaften und ihrer Nickel-Gold-Beständigkeit nicht zufriedenstellend.

Es ist daher Aufgabe der Erfindung, modifizierte Epoxyacrylate mit erhöhtem Molekulargewicht herzustellen, deren Resistfilme nicht mehr klebrig sind und die ohne Zusatz weiterer hochmolekularer Bindemittel eine sehr gute Kantenabdeckung haben und die darüber hinaus sehr gute Hafteigenschaften und eine gute Nickel-Gold-Beständigkeit haben.

Die Lösung der Aufgabe erfolgt durch Epoxyacrylate gemäß der Ansprüche 1 bis 3 und durch Verfahren zu ihrer Herstellung gemäß der Ansprüche 4 bis 6. Die erfindungsgemäßen, modifizierten Epoxyacrylate werden bevorzugt in Photoresistformulierungen verwendet.

Es wurde gefunden, daß sich Epoxyacrylate mit erhöhtem Molekulargewicht dadurch herstellen lassen, daß epoxidierte Novolake mit einer aromatischen Hydroxycarbonsäure im molaren Verhältnis epoxidierter Novolak zu Hydroxycarbonsäure von 2 : 0,5 bis 2 : 1,5, insbesondere von 2 : 1 umgesetzt werden und die resultierenden Additionsprodukte mit einer ethylenisch ungesättigten Monocarbonsäure umgesetzt werden.

Die erhaltenen Produkte entsprechen der allgemeinen Formel I: 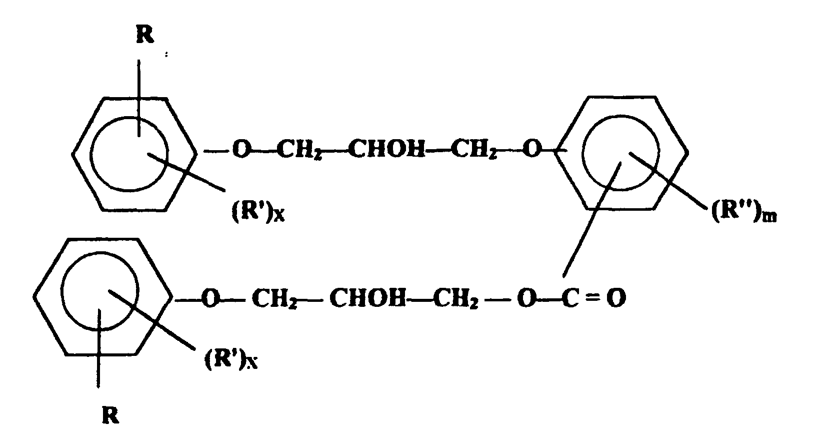 , worin
R einen Rest der allgemeinen Formel II 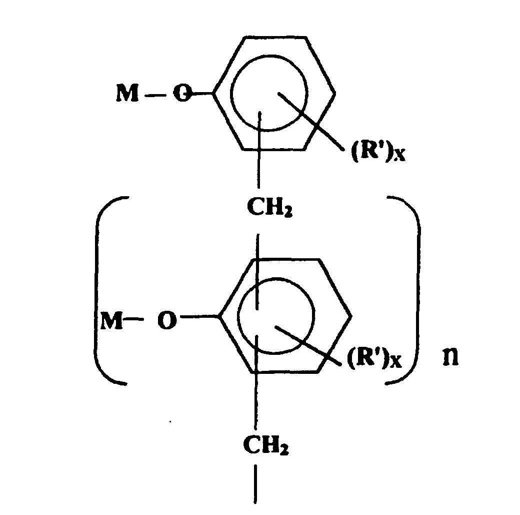 R' eine C₁-C₄ Alkylgruppe oder ein Halogenrest,
x eine ganze Zahl von 0 bis 3,
R" eine Hydroxylgruppe,
m eine ganze Zahl von 0 bis 4,
n eine ganze Zahl von 0 bis 300 und
M einen Rest gemäß der Formeln 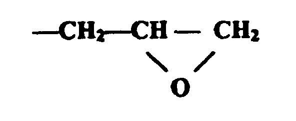 und/oder 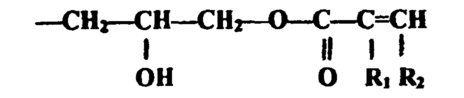 bedeuten, worin
R₁ Wasserstoff oder eine Methylgruppe, und
R₂ Wasserstoff oder eine Methyl- oder Phenylgruppe darstellen.

Erfolgt die Umsetzung des Reaktionsproduktes aus Epoxynovolak mit aromatischer Hydroxycarbonsäure mit mindestens 10 Mol% einer ethylenisch ungesättigten Monocarbonsäure, so werden Produkte der allgemeinen Formel 1 erhalten, bei denen mindestens 10 % der Reste M die Struktur der Formel 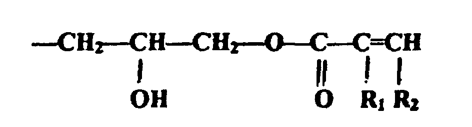 haben, worin R₁ und R₂ die vorgenannte Bedeutung haben.

Diese modifizierten Epoxyacrylate sind bei Raumtemperatur klebfreie, hochreaktive Verbindungen, die in organischen Lösemitteln löslich sind und die bei ihrem Einsatz in Photoresistformulierungen auch ohne zusätzliche Verwendung anderer Hochpolymerer eine sehr gute Kantenabdeckung und sehr gute Hafteigenschaften und eine gute Nickel-Gold-Beständigkeit haben.
Aufgrund ihrer ethylenisch ungesättigten Gruppen vernetzten sie nach Bestrahlung zu in organischen Lösemitteln nicht mehr löslichen Polymeren. Dadurch sind Photoresistformulierungen, die diese modifizierten Epoxyacrylate enthalten, mit üblichen Lösemitteln und in den üblicherweise angewandten Verfahren entwickelbar.
Die Endvernetzung der vorvernetzten Epoxyacrylate erfolgt durch an sich bekannte thermische Vernetzung der Epoxidgruppen.

Setzt man 100% der Epoxidgruppen mit ethylenisch ungesättigten Monocarbonsäuren um, so kann man in einem weiteren Schritt die Hydroxylgruppen der Epoxyacrylate gemäß der allgemeinen Formel I mit einem Anhydrid einer mehrwertigen Carbonsäure verestern. Damit werden die entsprechenden carboxylgruppenhaltigen Partialester erhalten. Sofern mindestens 50% aller Hydroxylgruppen verestert werden, sind die erhaltenen carboxylgruppenhaltigen Partialester in wäßriger Alkalilauge löslich. Aufgrund ihrer ethylenisch ungesättigten Gruppen vernetzten sie nach Bestrahlung zu in wäßriger Alkalilauge nicht mehr löslichen Polymeren. Dadurch sind Photoresistformulierungen, die diese modifizierten, carboxylgruppenhaltigen Epoxyacrylate enthalten, mit wäßriger Alkalilauge in üblichen Verfahren entwickelbar. Auch bei diesen modifizierten Epoxyacrylaten erfolgt die Endvernetzung der vorvernetzten Epoxyacrylate durch an sich bekannte thermische Vernetzung der Epoxidgruppen.

Zur Herstellung der Reaktionsprodukte aus Epoxynovolaken und aromatischen Hydroxycarbonsäuren werden Epoxynovolake und die Hydroxycarbonsäuren im molaren Verhältnis von 2 : 0,5 bis 2 : 1,5, bevorzugt von 2 : 1 in an sich bekannter Weise miteinander umgesetzt.
Als Epoxynovolake können alle an sich bekannten Umsetzungsprodukte aus in saurem Medium hergestellten Novolaken aus einer phenolischen Verbindung und einem Aldehyd, insbesondere Formaldehyd, mit Epichlorhydrin eingesetzt werden. Phenolische Verbindungen für derartige Novolake sind insbesondere Phenol oder mit Halogen oder C₁bis C₄-Alkylgruppen substituierte Phenole.
Aromatische Hydroxycarbonsäuren sind insbesondere o- oder p- Hydroxybenzoesäure, Dihydroxybenzoesäure oder Gallussäure. Die bevorzugte aromatische Hydroxycarbonsäure ist die Salicylsäure.
Die erhaltenen Reaktionsprodukte und damit auch die aus ihnen hergestellten Epoxyacrylate enthalten sowohl Ether als auch Esterbindungen.

Die Umsetzung dieser Reaktionsprodukte mit einer ethylenisch ungesättigten Monocarbonsäure zu den erfindungsgemäßen, modifizierten Epoxyacrylaten erfolgt analog zu der an sich bekannten Umsetzung von Epoxynovolaken mit ethylenisch ungesättigten Monocarbonsäuren unter Mitwirkung eines an sich bekannten Katalysators.
Als ethylenisch ungesättigte Monocarbonsäuren kommen vor allem Crotonsäure, Zimtsäure, insbesondere aber Acryl- und/oder Methacrylsäure in Betracht. Die Menge der eingesetzten ethylenisch ungesättigten Monocarbonsäure bestimmt dabei die gewünschte photochemische Reaktivität. Für eine reaktive Resistformulierung ist somit eine Mindestmenge an ethylenisch ungesättigten Gruppen im modifizierten Epoxyacrylat notwendig. Diese liegt etwa bei 10% der Epoxygruppen der Reaktionsprodukte. Für die abschließende thermische Vernetzung der modifizierten Epoxyacrylate sind andererseits noch mindestens 10 % der ursprünglich vorhandenen Epoxidgruppen im Molekül notwendig. Daher wird die Menge an ethylenisch ungesättigter Monocarbonsäure so gewählt, daß sie stöchiometrisch 10 bis 90 % der Epoxidgruppen der eingesetzten Reaktionsprodukte aus Epoxynovolak und aromatischer Hydroxycarbonsäure entspricht.

Die eventuell gewünschte weitere Veresterung der sekundären Hydroxylgruppen der erhaltenen modifizierten Epoxyacrylate mit Anhydrid einer mehrwertigen Carbonsäure setzt eine 100 %ige Umsetzung der Epoxidverbindungen mit den ethylenisch ungesättigten Carbonsäuren voraus und erfolgt in an sich aus der Umsetzung von Epoxyacrylaten mit Carbonsäureanhydrid bekannten Weise. Je nach gewünschter Alkalilöslichkeit dieser Produkte wird dazu die Menge an Carbonsäureanhydrid so gewählt, daß sie 50 bis 100% der stöchiometrischen Menge beträgt, die der Summe aller Hydroxylgruppen der modifizierten Epoxyacrylate entspricht.
Als Carbonsäureanhydride für diese Reaktion eignen sich die Anhydride gesättigter oder ungesättigter aliphatischer oder aromatischer mehrwertiger Carbonsäuren sowie Gemische mehrerer Anhydride. Beispiele sind die Anhydride der Phthal-, Tetrahydrophthal-, Hexahydrophthal-, Malein-, Malon-, Bernstein-, Glutar-, Adipin-, Itacon-, Trimellith-, Pyromellith- oder Benzophenontetracarbonsäure. Das bevorzugte Anhydrid ist das Methyltetrahydrophthalsäureanhydrid.

### Beispiele

### Beispiel 1 (Modifiziertes Epoxidharz)

In einem mit Rührer, Thermometer und Zugabevorrichtung versehenen Reaktor werden 2640 g (2 mol) epoxidierter Novolak (Epoxyäquivalentgewicht: 211g/Äquivalent ; Schmelzviskosität bei 150°C: 1.450 mPA^{·}s) in Butylglykolacetat (BGA) bei 120°C gelöst. Unter Rühren werden nacheinander 2 g Katalysator (Ethyltriphenylphosphoniumacetat) und 138 g (1 mol) Salicylsäure zugegeben. Das Reaktionsgemisch wird auf 155 bis 160°C erwärmt und solange bei dieser Temperatur gehalten, bis die Säurezahl <1 mgKOH/g ist. Es entsteht ein modifiziertes Epoxidharz mit einem Molekulargewicht von etwa 2778 g/mol, dessen 65%ige Lösung in BGA bei 25°C eine Viskosität von 4.600 mPa·s beträgt.

### Beispiel 2 (modifiziertes Epoxyacrylat)

In einem mit Rührer, Thermometer, Gaseinleitungsrohr und Zugabevorrichtung versehenen Reaktor werden 403 g (1 Epoxidäquivalent) des modifizierten Epoxidharzes aus Beispiel 1, 0,5 g Hydrochinonmonomethylether und 2 g Triphenylphosphin eingewogen und auf 90°C erwärmt. Unter Rühren und ständiger Lufteinleitung werden innerhalb von 3 Stunden 72,1 g (1 mol) Acrylsäure zugegeben.
Das Reaktionsgemisch wird unter Rühren und Lufteinleitung weiter bei 90°C gehalten, bis es eine Säurezahl von <5mg KOH/g aufweist. Es entsteht ein modifiziertes Epoxyacrylat, dessen Feststoffanteil auf 65% eingestellt wird.

### Beispiel 3 (teilverestertes, modifiziertes Epoxyacrylat)

In einem mit Rührer, Thermometer, Gaseinleitungsrohr und Zugabevorrichtung versehenen Reaktor werden 1000g des gemäß Beispiel 2 hergestellten modifizierten Epoxyacrylats unter Rühren auf 80°C erwärmt. Unter ständiger Lufteinleitung werden innerhalb von 2 Stunden 170 g (1,11 mol) Tetrahydrophthalsäureanhydrid zugegeben. Das Reaktionsgemisch wird unter Rühren und ständiger Lufteinleitung 18 Stunden bei 80°C gehalten. Das entstehende teilveresterte Epoxyacrylat hat eine Säurezahl von 55 mg KOH/g, einen Festharzanteil von 65% und eine Viskosität bei 25°C von 25.000 mPa^{·}s.

## Patentansprüche

1. Epoxyacrylate der allgemeinen Formel I 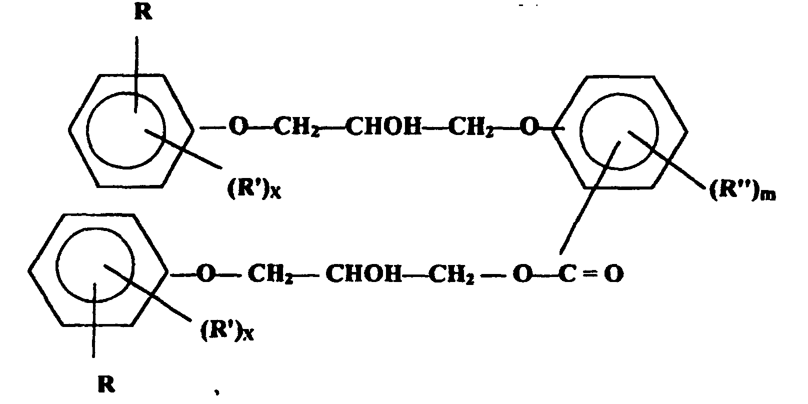 worin
R einen Rest der allgemeinen Formel II 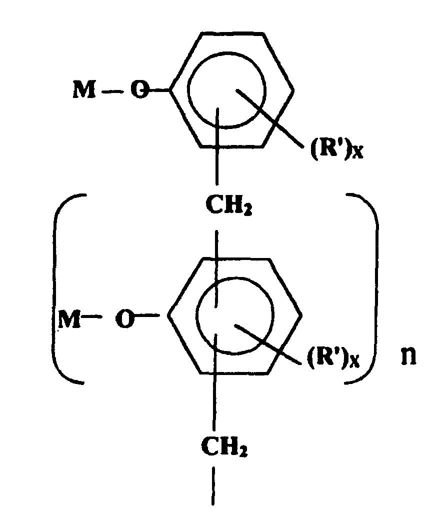
R' eine C₁-C₄ Alkylgruppe oder ein Halogenrest,
x eine ganze Zahl von 0 bis 3,
R" eine Hydroxylgruppe,
m eine ganze Zahl von 0 bis 4,
n eine ganze Zahl von 0 bis 300 und
M einen Rest gemäß der Formeln 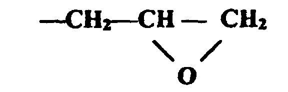 und/oder 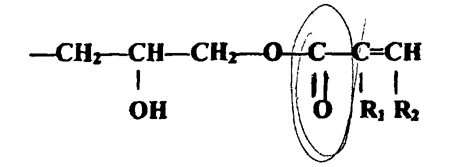
bedeuten, worin
R₁ Wasserstoff oder eine Methylgruppe, und
R₂ Wasserstoff oder eine Methyl- oder Phenylgruppe darstellen.

2. Epoxyacrylate der allgemeinen Formel 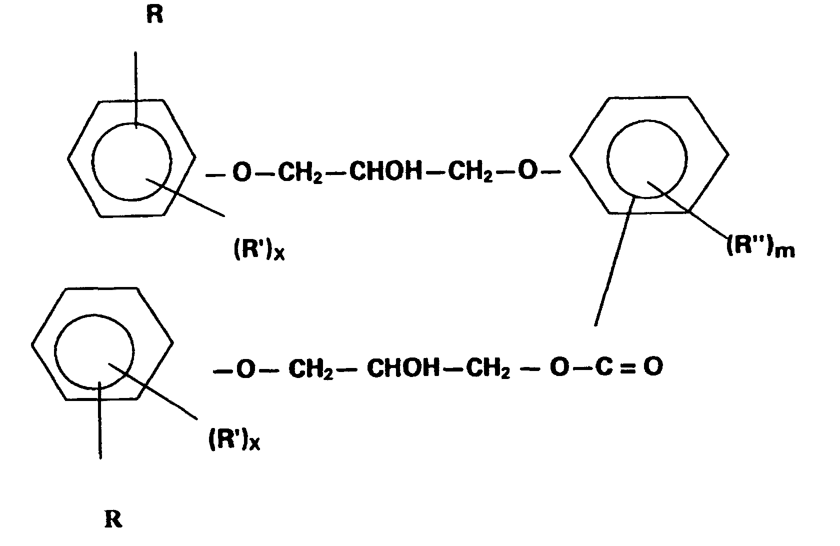 worin
R einen Rest der allgemeinen Formel II 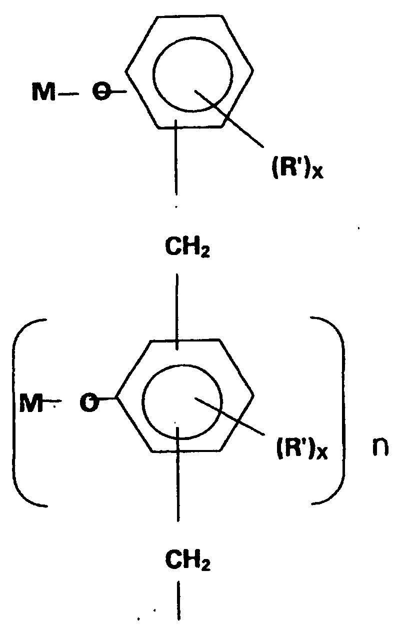
R' eine C₁-C₄ Alkylgruppe oder ein Halogenrest,
x eine ganze Zahl von 0 bis 3,
R" eine Hydroxylgruppe,
m eine ganze Zahl von 0 bis 4,
n eine ganze Zahl von 0 bis 300 und
wobei mindestens 10 Mol% der Reste M die Struktur der Formel 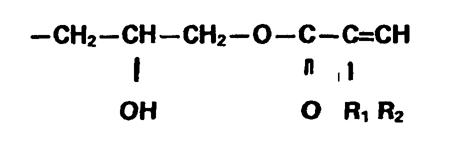 haben, worin
R₁ Wasserstoff oder eine Methylgruppe, und
R₂ Wasserstoff oder eine Methyl- oder Phenylgruppe darstellen.

3. Epoxyacrylate der allgemeinen Formel I 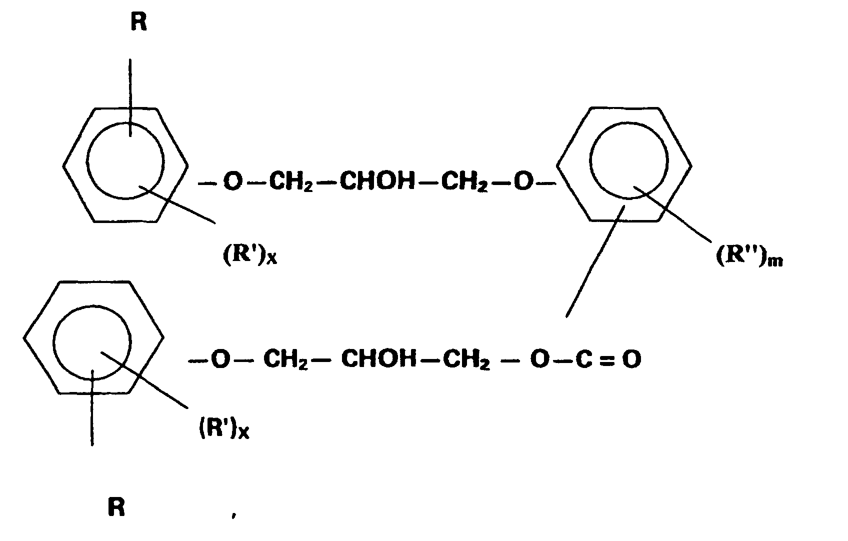 worin
R einen Rest der allgemeinen Formel II 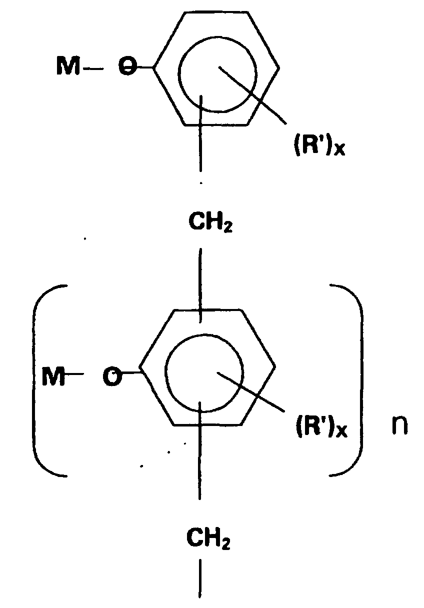
R' eine C₁-C₄ Alkylgruppe oder ein Halogenrest,
x eine ganze Zahl von 0 bis 3,
R" eine Hydroxylgruppe,
m eine ganze Zahl von 0 bis 4,
n eine ganze Zahl von 0 bis 300 und
M einen Rest gemäß der Formeln 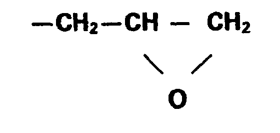 und/oder 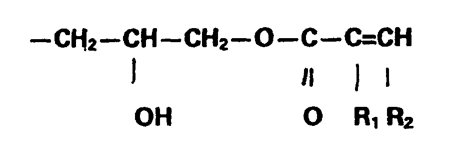
bedeuten, worin
R₁ Wasserstoff oder eine Methylgruppe, und
R₂ Wasserstoff oder eine Methyl- oder Phenylgruppe darstellen,
wobei 50 bis 100 % aller Hydroxylgruppen mit einem Anhydrid einer mehrwertigen Carbonsäure verestert sind.

4. Verfahren zur Herstellung der Epoxyacrylate gemäß der Ansprüche 1 und 2, **dadurch gekennzeichnet, daß** epoxidierte Novolake mit einer aromatischen Hydroxycarbonsäure im molaren Verhältnis epoxidierter Novolak zu Hydroxycarbonsäure von 2 : 0,5 bis 2 : 1,5 umgesetzt werden und die resultierenden Produkte mit mindestens 10 Mol% einer ethylenisch ungesättigten Monocarbonsäure umgesetzt werden.

5. Verfahren nach Anspruch 4, **dadurch gekennzeichnet, daß** epoxidierte Novolake mit einer aromatischen Hydroxycarbonsäure im molaren Verhältnis epoxidierter Novolak zu Hydroxycarbonsäure von 2 : 1 umgesetzt werden und die resultierenden Produkte mit mindestens 10 Mol% einer ethylenisch ungesättigten Monocarbonsäure umgesetzt werden.

6. Verfahren zur Herstellung der Epoxyacrylate gemäß Anspruch 3, **dadurch gekennzeichnet, daß** Epoxyacrylate gemäß der Ansprüche 1 oder 2 mit einem Säuranhydrid einer mehrwertigen Carbonsäure verestert werden, wobei die Menge an Carbonsäureanhydrid 50 bis 100% der stöchiometrischen Menge beträgt, die der Summe aller Hydroxylgruppen entspricht.

7. Verfahren nach Anspruch 6, **dadurch gekennzeichnet, daß** das Carbonsäureanhydrid Methyltetrahydrophthalsäureanhydrid ist.

8. Verwendung der Epoxyacrylate gemäß der Ansprüche 1 bis 3 in Photoresistformulierungen.

## Claims

1. Epoxy acrylates of the general formula I 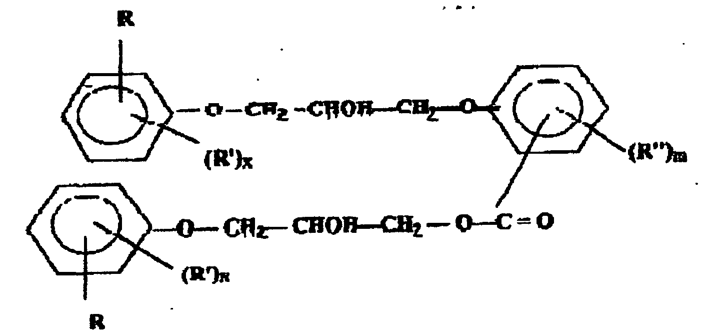 in which
R is a radical of the general formula II 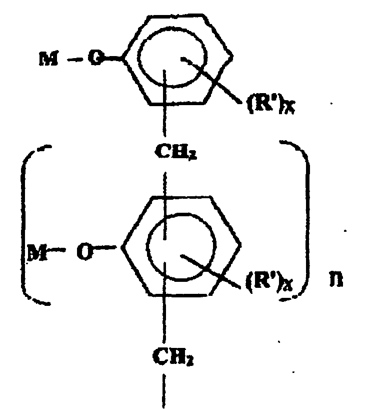
R' is a C₁-C₄ alkyl group or a halogen radical,
x is an integer from 0 to 3,
R" is a hydroxyl group,
m is an integer from 0 to 4,
n is an integer from 0 to 300 and
M is a radical according to the formulae 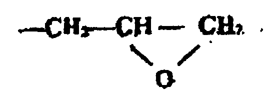 and/or 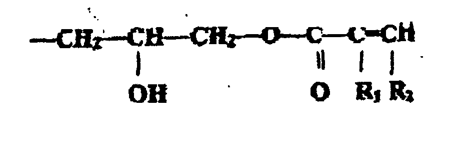
in which
R₁ is hydrogen or a methyl group and
R₂ is hydrogen or a methyl or phenyl group.

2. Epoxy acrylates of the general formula I 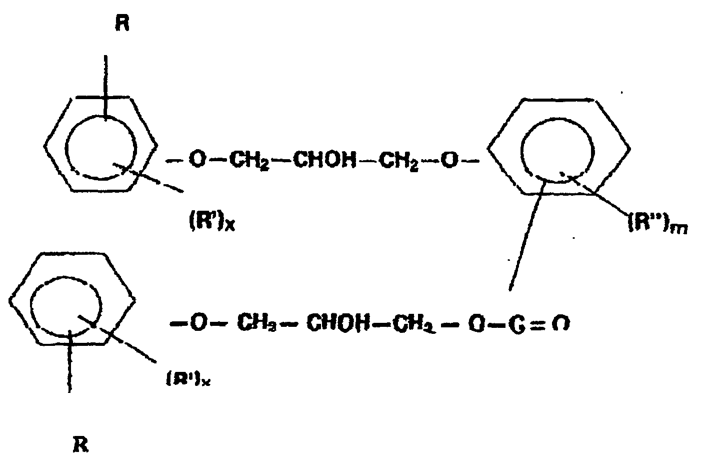 in which
R is a radical of the general formula II 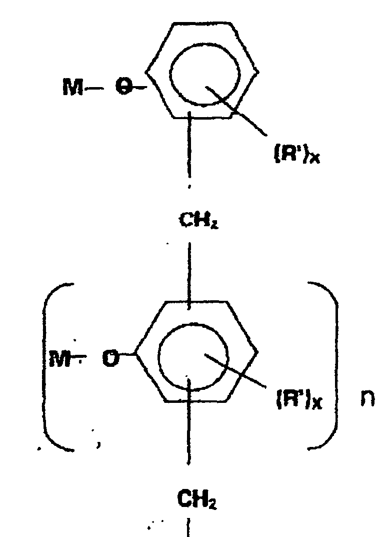
R' is a C₁-C₄ alkyl group or a halogen radical,
x is an integer from 0 to 3,
R" is a hydroxyl group,
m is an integer from 0 to 4,
n is an integer from 0 to 300 and
at least 10 mol% of the radicals M have the structure of the formula 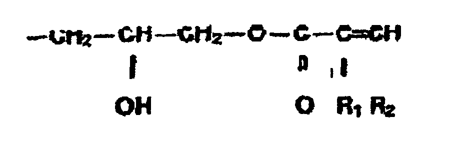 in which
R₁ is hydrogen or a methyl group and
R₂ is hydrogen or a methyl or phenyl group.

3. Epoxy acrylates of the general formula I 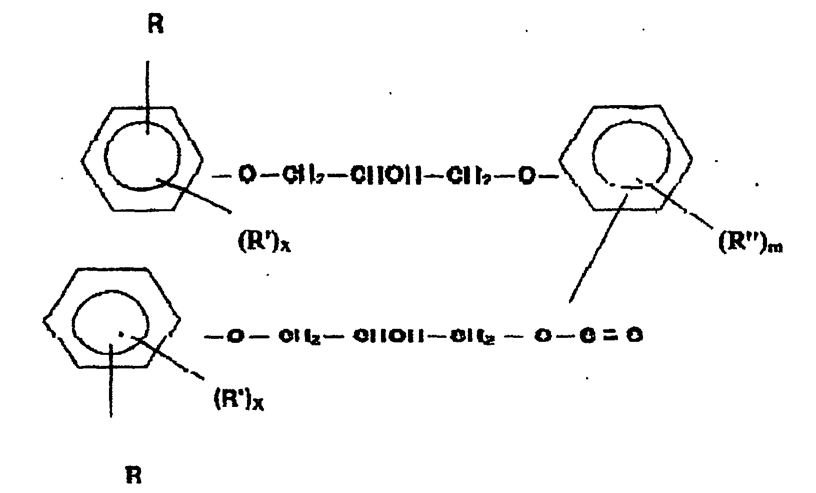 in which
R is a radical of the general formula II 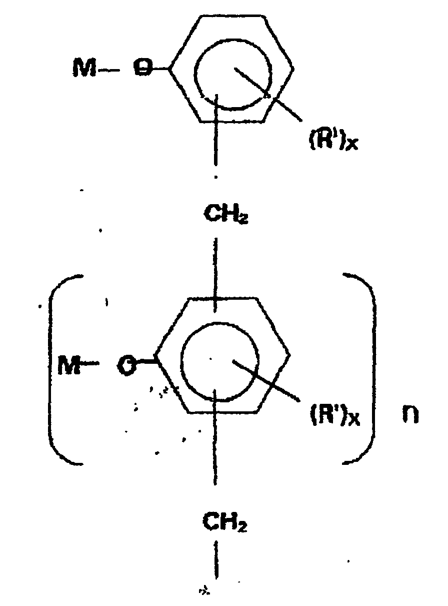
R' is a C₁-C₄ alkyl group or a halogen radical,
x is an integer from 0 to 3,
R" is a hydroxyl group,
m is an integer from 0 to 4,
n is an integer from 0 to 300 and
M is a radical according to the formulae 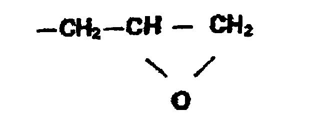 and/or 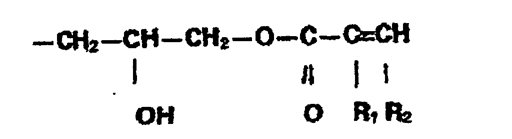
in which
R₁ is hydrogen or a methyl group and
R₂ is hydrogen or a methyl or phenyl group,
and in which 50% to 100% of all hydroxyl groups are esterified with an anhydride of a polybasic carboxylic acid.

4. Process for preparing the epoxy acrylates according to Claims 1 and 2, **characterized in that** epoxidized novolaks are reacted with an aromatic hydroxy carboxylic acid in a molar ratio of epoxidized novolak to hydroxy carboxylic acid of 2:0.5 to 2:1.5 and the resulting products are reacted with at least 10 mol% of an ethylenically unsaturated monocarboxylic acid.

5. Process according to Claim 4, **characterized in that** epoxidized novolaks are reacted with an aromatic hydroxy carboxylic acid in a molar ratio of epoxidized novolak to hydroxy carboxylic acid of 2:1 and the resulting products are reacted with at least 10 mol% of an ethylenically unsaturated monocarboxylic acid.

6. Process for preparing the epoxy acrylates according to Claim 3, **characterized in that** epoxy acrylates according to Claims 1 or 2 are esterified with an acid anhydride of a polybasic carboxylic acid, the amount of carboxylic anhydride being 50% to 100% of the stoichiometric amount which corresponds to the sum of all hydroxyl groups.

7. Process according to Claim 6, **characterized in that** the carboxylic anhydride is methyltetrahydrophthalic anhydride.

8. Use of the epoxy acrylates according to Claims 1 to 3 in photoresist formulations.

## Revendications

1. Epoxyacrylates de formule générale I 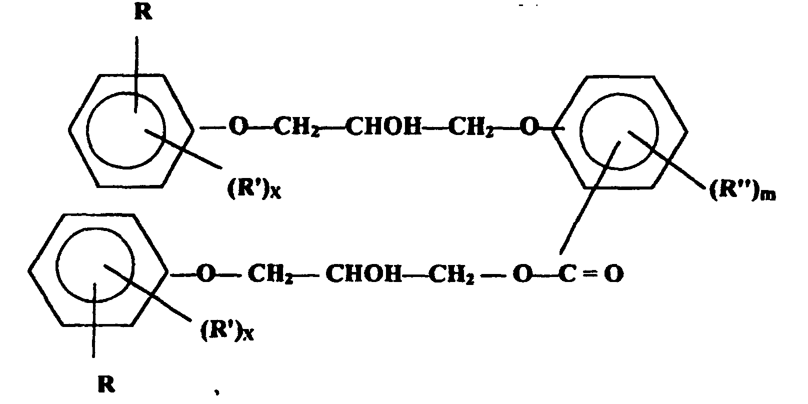 dans laquelle
R représente un radical de formule générale II 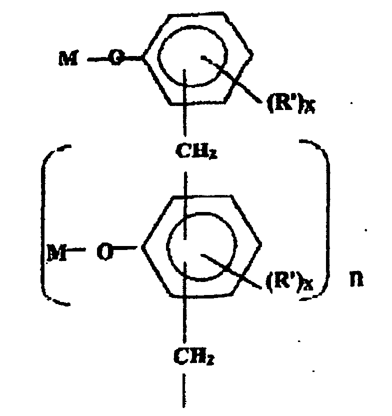
R' représente un groupe alkyle en C₁-C₄ ou un radical halogéno,
x représente un entier de 0 à 3,
R" représente un groupe hydroxy,
m représente un entier de 0 à 4,
n représente un entier de 0 à 300 et
M représente un radical selon les formules 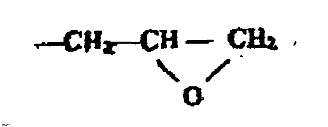 et/ou 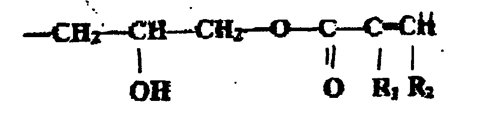
dans lesquelles
R₁ représente un hydrogène ou un groupe méthyle, et
R₂ représente un hydrogène ou un groupe méthyle ou phényle.

2. Epoxyacrylates de formule générale I 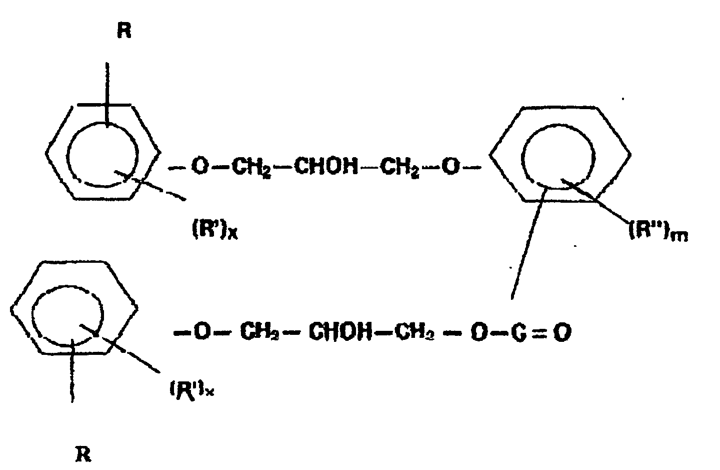 dans laquelle R représente un radical de formule générale II 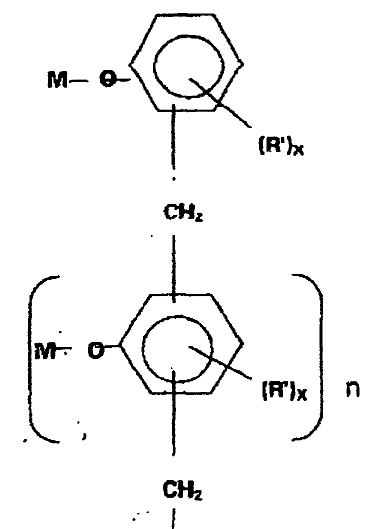
R' représente un groupe alkyle en C₁-C₄ ou un radical halogéno,
x représente un entier de 0 à 3,
R" représente un groupe hydroxy,
m représente un entier de 0 à 4,
n représente un entier de 0 à 300 et
où au moins 10 % en moles des radicaux M présentent la structure de formule 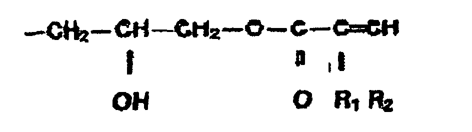 dans laquelle
R₁ représente un hydrogène ou un groupe méthyle, et
R₂ représente un hydrogène ou un groupe méthyle ou phényle.

3. Epoxyacrylates de formule générale I 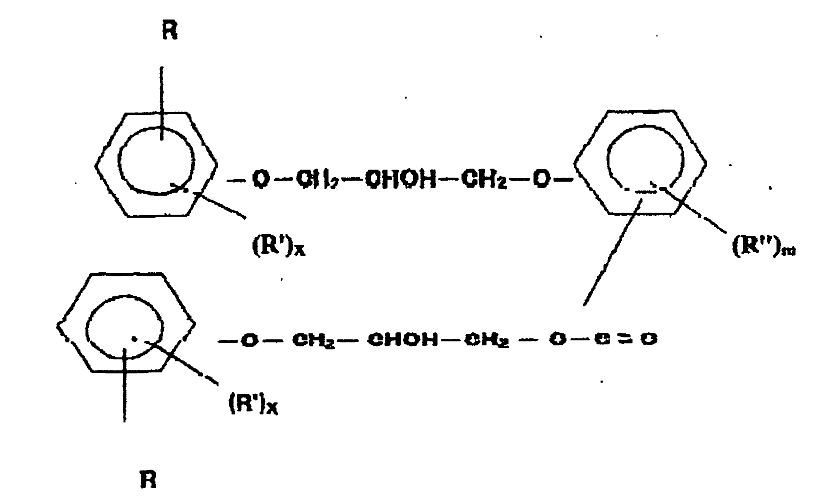 dans laquelle
R représente un radical de formule générale II 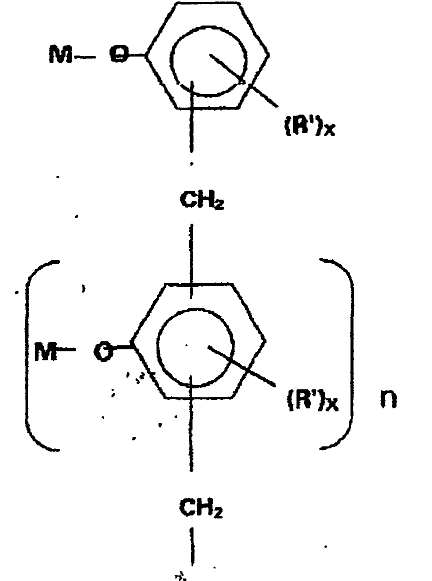
R' représente un groupe alkyle en C₁-C₄ ou un radical halogéno,
x représente un entier de 0 à 3,
R" représente un groupe hydroxy,
m représente un entier de 0 à 4,
n représente un entier de 0 à 300 et
M représente un radical selon les formules 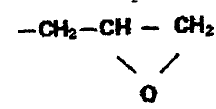 et/ou 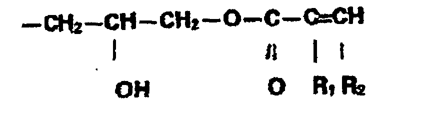
dans lesquelles
R₁ représente un hydrogène ou un groupe méthyle, et
R₂ représente un hydrogène ou un groupe méthyle ou phényle,
où de 50 à 100 % de tous les groupes hydroxy sont estérifiés avec un anhydride d'un acide carboxylique polyvalent.

4. Procédé de préparation des époxyacrylates selon les revendications 1 et 2, **caractérisé en ce que** des novolaques époxydées sont mises à réagir avec un acide hydroxycarboxylique aromatique en un rapport molaire entre la novolaque époxydée et l'acide hydroxycarboxylique de 2:0,5 à 2:1,5, et les produits résultants sont mis à réagir avec au moins 10 % en moles d'un acide monocarboxylique éthyléniquement insaturé.

5. Procédé selon la revendication 4, **caractérisé en ce que** des novolaques époxydées sont mises à réagir avec un acide hydroxycarboxylique aromatique en un rapport molaire entre la novolaque époxydée et l'acide hydroxycarboxylique de 2:1, et les produits résultants sont mis à réagir avec au moins 10 % en moles d'un acide monocarboxylique éthyléniquement insaturé.

6. Procédé de préparation des époxyacrylates selon la revendication 3, **caractérisé en ce que** des époxyacrylates selon les revendications 1 ou 2 sont estérifiées avec un anhydryde d'acide d'un acide carboxylique polyvalent, où la quantité d'anhydride d'acide carboxylique est de 50 à 100 % de la quantité stoechiométrique qui correspond à la somme de tous les groupes hydroxy.

7. Procédé selon la revendication 6, **caractérisé en ce que** l'anhydride d'acide carboxylique est l'anhydride d'acide méthyltétrahydrophtalique.

8. Utilisation des époxyacrylates selon les revendications 1 à 3 dans des formulations de photorésists.
